# EUROPÄISCHE PATENTSCHRIFT

(11) **EP 1 290 916 B1**
(45) Veröffentlichungstag und Bekanntmachung des Hinweises auf die Patenterteilung: **17.12.2003**
(21) Anmeldenummer: 01936356.3
(22) Anmeldetag: 15.05.2001
(51) Int. Cl.: H05B 3/14, H05B 3/10, H05B 3/12, H05B 3/18, H05B 3/58, H05B 3/40, H05B 3/48, H05B 3/42, H05B 3/44, H01C 7/02, F02M 31/125

(54) **ELEKTRISCHE HEIZVORRICHTUNG**
ELECTRIC HEATING DEVICE
DISPOSITIF DE CHAUFFAGE ELECTRIQUE

(30) Priorität: 14.06.2000 DE 10029244; 22.11.2000 DE 20019890 U
(43) Veröffentlichungstag der Anmeldung: 12.03.2003
(73) Patentinhaber: Russegger, Elias, 5440 Golling (AT)
(72) Erfinder: Russegger, Elias, 5440 Golling (AT)
(74) Vertreter: Knapp, Thomas
(86) Internationale Anmeldenummer: EP0105470
(87) Internationale Veröffentlichungsnummer: WO01097566

(56) Entgegenhaltungen:
- EP-A- 0 312 204
- EP-A- 0 495 402
- EP-A- 0 820 214
- EP-A- 0 899 985
- DE-A- 3 716 142
- FR-A- 2 404 985
- GB-A- 2 143 708
- GB-A- 2 197 419
- US-A- 4 371 778
- US-A- 4 399 796
- US-A- 4 407 254
- US-A- 4 489 232
- US-A- 4 593 670
- US-A- 4 651 702
- US-A- 4 874 925
- US-A- 4 899 032
- US-A- 5 278 940
- US-A- 5 434 388

## Beschreibung

Die vorliegende Erfindung betrifft eine elektrische Heizvorrichtung, insbesondere für Fluide wie z.B. flüssigen Brennstoff, mit einem einen elektrischen Widerstand umfassenden Heizelement, welcher an eine elektrische Leistungsquelle anschließbar ist.

Eine solche Vorrichtung ist vom Markt her bekannt. Bei ihr ist in einer Brennstoffleitung, z.B. einem Öl-Zuführrohr zu einem Ölheizungsbrenner, eine sog. "Heizpatrone" angeordnet, welche eine Heizwendel mit Thermoelement umfasst, die in den in der Brennstoffleitung transportierten Brennstoffstrom hineinragt. Das Thermoelement wird zur Temperaturerfassung und Temperaturregelung verwendet. Wird an die Heizpatrone eine elektrische Spannung angelegt, erwärmt sich die Heizwendel und der an ihr vorbeiströmende Brennstoff. Der Vorteil einer solchen Erwärmung liegt darin, dass der erwärmte Brennstoff eine geringe Viskosität aufweist und daher auf der Wand der üblichen Hohlkegeldüse einen sehr dünnen Brennstofffilm bildet. Dies wiederum verringert den Durchfluss auch bei relativ großer Düsenöffnung. Eine relativ große Düsenöffnung ist wegen der sonst vorhandenen Verstopfungsgefahr gewünscht.
Auf diese Weise können Zerstäubungsbrenner mit kleiner Leistung bei relativ großem Düsenquerschnitt betrieben werden. Darüber hinaus wird der Brennstoff durch die Düse aufgrund der geringen Viskosität gleichmäßiger und in einen feineren Spray vernebelt und zündet daher besser. Insgesamt wird also durch die Erwärmung des Brennstoffes auch der Brennstoffverbrauch reduziert.

Die vom Markt her bekannte Vorrichtung hat jedoch den Nachteil, dass sie im Bezug auf ihre Bauweise kompliziert und schwierig in das Öl-Zuführrohr zu integrieren ist. Außerdem ist die Regelung mit einem Thermoelement und einer elektronischen Regelungs- und Steuerungseinheit relativ aufwändig, was die Kosten erhöht. Schließlich muss die Heizwendel zur Erwärmung des Brennstoffs in vielen Fällen ziemlich heiß werden muss, so dass der Brennstoff, welcher in direktem Kontakt mit der Heizwendel ist, verdampft und ein isolierendes Dampfpolster zwischen dem restlichen flüssigen Brennstoff und der Heizwendel bildet. Durch dieses thermisch isolierende Polster wird der Wärmeübergang zwischen der Heizwendel und dem Brennstoff reduziert, wodurch zur Erwärmung des Brennstoffs mehr Energie erforderlich ist und der Brennstoff nicht gleichmäßig erwärmt wird.

Eine andere vom Markt her bekannte elektrische Heizeinrichtung der eingangs genannten Art wird z.B. als Kochplatte verwendet. Auch bei dieser wird die Temperatur der Heizplatte durch ein Thermoelement erfaßt und über eine separate Regelungs- und Steuerungseinheit eingestellt. Auch dies ist aufwändig und dazuhin noch in der Reaktion träge.

Eine Heizvorrichtung gemäß dem Oberbegriff des Anspruchs 1 ist aus EP-A-0 312 204 bekannt.

Die vorliegende Erfindung hat daher die Aufgabe, eine Heizvorrichtung der eingangs genannten Art so weiter zu bilden, dass sie einfach baut, leicht integrierbar ist, der Aufwand zur Temperaturregelung vermindert wird, eine gleichmäßige Erhitzung des zu erwärmenden Stoffes möglich ist und eine schnelle Reaktionszeit bei der Regelung der Temperatur erzielt wird.

Diese Aufgabe wird erfindungsgemäß dadurch gelöst, dass das Heizelement ein Trägerelement umfaßt, auf das eine elektrisch leitende Heizschicht aus einem PTC-Material mit positivem Temperatur-Widerstandskoeffizienten durch Plasmabeschichten oder Plasmaspritzen zumindest bereichsweise auf eine Wand der Brennstoffleitung aufgebracht ist.

Bei der Verwendung von PTC-Material kann u.U. auf eine externe Regelung vorllständig verzichtet werden, da dieses Material den spezifischen Widerstand mit der Temperatur in entsprechender Weise verändert: Mit sinkender Temperatur wird sein spezifischer elektrischer Widerstand geringer, wodurch der durch ihn hindurchgeleitete Strom, konstante Spannung vorausgesetzt, steigt. Dies führt wiederum zu einem Anstieg der Heizleistung und zu einem Anstieg der Temperatur mit umgekehrter Wirkung auf den Widerstand. Ein solches Material regelt sich also selbst. Um eine bestimmte Temperatur einzustellen, ist also nur eine konstante Spannungsvorgabe erforderlich, eine Regelung oder gar ein Thermoelement kann entfallen.

Aufgrund der geringen Masse der Heizschicht können ferner sehr schnelle Aufheizzeiten und eine insgesamt ausgeprägte Dynamik der erfindungsgemäßen Heizvorrichtung realisiert werden. Dies wiederum führt zu einer hohen Effizienz der Vorrichtung. Die mit der Heizvorrichtung maximal erzielbaren Temperaturen liegen ungefähr zwischen 500 und 1000°C.

Vorteilhafte Weiterbildungen der Erfindung sind in Unteransprüchen angegeben:

Eine automatische Begrenzung der mit der Heizvorrichtung maximal erreichbaren Temperatur kann gemäß einer ersten Weiterbildung der Erfindung dadurch ereicht werden, dass ein PTC-Material verwendet wird, dessen Temperatur-Widerstands-Kennlinie ab einer bestimmten Temperatur in der Art eines "Knicks" seine Steigung verändert.

Dabei wird besonders bevorzugt, dass die Steigungsänderung so ausgebildet ist, dass eine bestimmte Temperatur konstant gehalten werden kann. In diesem Fall regelt sich die lokale und durch die Eigenschaften des Materials mindestens mitdefinierte Temperatur "von selbst" ein, ohne dass ein Temperatursensor und eine entsprechende Steuer- und/oder Regeleinrichtung unbedingt notwendig ist. Durch das selbsttätige Abregeln kann auch zuverlässig ein Überhitzen ausgeschlossen werden. Durch den möglichen Wegfall zusätzlicher Komponenten wird die Herstellung der erfindungsgemäßen Heizvorrichtung erheblich vereinfacht.

Möglich ist aber auch, dass die elektrische Heizvorrichtung eine elektronische Steuer- und/oder Regelungseinrichtung aufweist, mit der eine bestimmte Temperatur wenigstens eines Bereichs der Heizschicht eingestellt werden kann. Dabei kann die Heizschicht selbst als Temperatursensor verwendet werden, da ihr Widerstand ein Maß für die Temperatur ist. Der Widerstand der Heizschicht kann in der Steuer- und Regelungseinrichtung ausgewertet und die entsprechende Temperatur bestimmt werden.

Vorteilhafterweise wird die Heizschicht durch ein thermisches Verfahren, insbesondere durch Plasmabeschichten, Aufdampfen, Plasmaspritzen, Hochgeschwindigkeitsflammspritzen, o.ä., aufgebracht. Dies ist bei einer Weiterbildung der Erfindung vorgesehen. Ein solches thermisches Verfahren ist auf der einen Seite preiswert und ermöglicht auf der anderen Seite eine optimale Haftung der Schichten einerseits an dem Trägerelement und andererseits untereinander.

Eine andere Weiterbildung zecihnet sich dadurch aus, dass die Heizschicht ein Keramikpulver umfaßt. Hierdurch wird sie besonders thermostabil und ist gut herstellbar.

Die Heizschicht kann auch ein Metallpulver umfassen, was ihre Aufbringbarkeit auf das Trägerelement verbessert.

Bei der anderen Weiterbildung der Erfindung ist die das Trägerelement aus einem elektrisch leitenden Material hergestellt und zwischen Heizschicht und Trägerelement ist eine elektrisch isolierende Schicht vorhanden. Oft bieten sich wegen der einfachen Herstellbarkeit Trägerelemente aus Metall an; Metalle sind jedoch elektrisch leitend. Daher muss in diesem Fall die Heizschicht gegenüber dem Trägerelement durch eine Schicht elektrisch isoliert werden. Durch diese Weiterbildung kann also die erfindungsgemäße Heizeinrichtung bei üblichen metallischen Trägerelementen eingesetzt werden.

Dabei kann die bei dieser Weiterbildung vorgesehene elektrisch leitende Eigenschaft des Trägerelements dazu genutzt werden, die elektrische Leistung der Heizschicht zuzuführen oder sie von der Heizschicht abzuführen. Dies ist dann möglich, wenn es sich, wie eine andere Weiterbildung der Erfindung vorsieht, bei der elektrischen Leistungsquelle um eine Niederspannungsquelle handelt und die Heizschicht an einer Stelle mit dem Trägerelement elektrisch verbunden ist.

Auf eine die Heizschicht von dem Trägerelement elektrisch isolierende Schicht kann dann verzichtet werden, wenn das Trägerelement selbst aus einem elektrisch isolierenden Material hergestellt ist. Hierzu zählen insbesondere viele temperaturbeständige Kunststoffe, aber auch Keramikmaterialien und Glas. In diesem Fall können auch höhere Spannungen zur elektrischen Leistungsversorgung der Heizschicht verwendet werden, ohne dass eine elektrisch isolierende Schicht erforderlich ist. Grundsätzlich gilt, dass die erfindungsgemäße Heizvorrichtung mit Spannungen ab ungefähr 1,5 Volt betrieben werden kann. Aber auch Spannungen bis 220 Volt und mehr sind möglich.

Die Handhabung der erfindungsgemäßen Vorrichtung durch Personen wird durch eine Weiterbildung erleichtert, bei der auf der dem Trägerelement entgegengesetzten Seite der Heizschicht eine elektrisch isolierende Schicht vorhanden ist. Diese Schicht schützt den Benutzer davor, mit der stromführenden Heizschicht in direkten Kontakt zu kommen.

Ein Beispiel für ein bevorzugtes Material für die elektrisch isolierenden Schichten ist Aluminiumoxid (Al₂O₃), aber auch Zirkonoxid. Grundsätzlich gilt, dass zumindest die zwischen Heizschicht und Trägerelement vorgesehene Isolierschicht zwar elektrisch ein guter Isolator, thermisch jedoch ein schlechter Isolator sein sollte. Ferner sollte das Material temperaturstabil sein und die Wärmedehnungen des Trägerelements mitmachen. Dies ist bei Aluminiumoxid als auch bei Zirkonoxid der Fall.

Eine gute Haftung der Isolierschichten wird dann erreicht, wenn sie durch ein thermisches Verfahren, insbesondere Plasmabeschichten, Aufdampfen oder Hochgeschwindigkeitsflammspritzen, aufgebracht sind.

Eine Weiterbildung der Heizvorrichtung zeichnet sich dadurch aus, dass die Dicke der Heizschicht über die Erstreckung des Trägerelements variiert, so dass die Leistungsverteilung bzw. die Leistungsaufnahme über die Erstreckung des Trägerelements variiert. Auf diese Weise kann ein bestimmtes Temperaturprofil in den beiden Flächenrichtungen des Trägerelements realisiert werden, ohne dass eine komplexe Regelung oder Steuerung hierfür erforderlich ist. Die Variation der Dicke kann dabei stufenlos sein, so dass auch eine stufenlose Leistungsverteilung möglich ist.

Dabei wird besonders bevorzugt, dass im Betrieb eine über die Erstreckung konstante Temperaturdifferenz zwischen Trägerelement und zu erhitzendem Material erreicht wird. Hierdurch wird der Tatsache Rechnung getragen, dass sich die Temperatur des zu erhitzenden Materials über die Ersteckung des Trägerelements verändern kann (z.B. kältere Temperatur am Rand). Durch eine Veränderung der Temperatur der Heizschicht über die Länge kann die Aufwärmung optimiert werden und ggf. die Erstreckung der für das Erwärmen notwendigen Heizschicht reduziert werden.

Als optimal haben sich die in einem Unteranspruch angegebenen Schichtstärken herausgestellt. Danach liegt die Schichtstärke mindestens einer der Schichten im Bereich von 0,002 bis 0,2 mm, vorzugsweise im Bereich von 0,005 bis 0,1 mm. Die genannten Dicken bilden, was die Heizschicht betrifft, einen Widerstand, welcher für die Erzielung der notwendigen Temperaturen im Bereich bis zu 400° C erforderlich ist. Im Hinblick auf die elektrisch isolierenden Schichten wiederum sorgen die angegeben Schichtstärken für eine möglichst geringe thermisch isolierende Wirkung.

In Weiterbildung der Erfindung werden ferner verschiedene bsonders bevorzugte Anwendungen genannt. So kann die Heizvorrichtung vorzugsweise zum Erwärmen von einem Brenner zuzuführendem Heizöl, als Durchlauferhitzer für Wasser, als Kochplatte, zur Erwärmung des Kühlwassers in Kraftfahrzeugen, zur Heizung von Kraftstofffiltern zur Parafinabscheidung, zur Scheiben- oder Spiegelheizung, zur Tragflächenenteisung bei Flugzeugen, zur Wandheizung von Räumen oder zur Heizung von Böden (beispielsweise als Gefrierschutz) oder als Warmhalteplatte verwendet werden. Die erfindungsgemäße Heizvorrichtung kann dabei auch auf beliebige Freiformflächen mit beliebiger Geometrie und auch auf unebene und/oder raue Oberflächen aufgebracht werden. Die Aufbringung ist dabei preiswert über Roboter möglich.

Zur Erwärmung von Fluiden eignet sich die Weiterbildung der Erfindung, bei der das Trägerelement ein röhrförmiges Element umfaßt.

Bei einer besonders bevorzugten Weiterbildung der Erfindung mit rohrförmigem Trägerelement umfaßt dieses eine Brennstoffleitung mit einem Einlaß und einem Auslaß, wobei dei Heizschicht zumindest bereichsweise auf eine Wand der Brennstoffleitung aufgebracht ist. Bei der erfindungsgemäßen Vorrichtung wird also auf eine Heizwendel und die mit ihr zusammenhängende geringe Kontaktfläche zum Brennstoff vollkommen verzichtet. Stattdessen wird zumindest ein Bereich der Wand der Brennstoffleitung durch die Heizschicht erwärmt. Die auf diese Weise geschaffene Kontaktfläche zwischen der erwärmten Wand der Brennstoffleitung und dem Brennstoff selbst ist erheblich größer als die Kontaktfläche zwischen dem Brennstoff und einer Heizwendel, so dass die Temperatur der Wand selbst geringer sein kann, was die Gefahr der Brennstoffdampfbildung verringert. Natürlich ist dieser Vorteil um so spürbarer, je größer die von der Heizschicht erwärmte Wandfläche der Brennstoffleitung ist. Es ist daher am besten, wenn die Stellen, an denen die Pole der elektrischen Leistungsquelle mit der Heizschicht verbunden sind, möglichst weit voneinander beabstandet, z.B. einerseits am Einlass und andererseits am Auslass angeordnet sind.

Bei einer Weiterbildung weist die Brennstoffleitung an einem Ende eine Einspritzdüse auf. Dies hat den Vorteil, dass der Weg von dem erwärmten Bereich bis zur Einspritzdüse relativ kurz ist. Ggf. kann auch die Einspritzdüse durch eine entsprechende Beschichtung mit aufgeheizt werden, was die Bildung eines optimalen Brennstoff-Sprays zusätzlich fördert.

Eine besonders bevorzugte Weiterbildung ist in einem anderen Unteranspruch angegeben: Danach umfasst die Brennstoffleitung mindestens im Bereich der Heizschicht einen Ringraum, durch den der Brennstoff geleitet wird. Auf diese Weise wird das tatsächlich zu erwärmende Brennstoffvolumen reduziert, was einerseits die einzubringende Heizleistung reduziert und andererseits die Temperaturverteilung im durch die Brennstoffleitung fließenden Brennstoff verbessert sowie die Regelungs-Reaktionszeit verkürzt.

Ferner ist noch eine besonders leicht handzuhabende elektrische Kontakteinrichtung für die Heizschicht genannt: Danach weist die Vorrichtung mindestens einen auf die Brennstoffleitung aufschiebbaren Kontaktring auf, der die Heizschicht elektrisch kontaktiert. Ein derartiger Kontakt kann z.B. über eine Schneide erfolgen, die beim Aufschieben eine ggf. auf der Heizschicht vorhandene elektrische Isolierschicht aufritzt und sich in die Heizschicht eingräbt, so dass ein sicherer Kontakt gewährleistet ist.

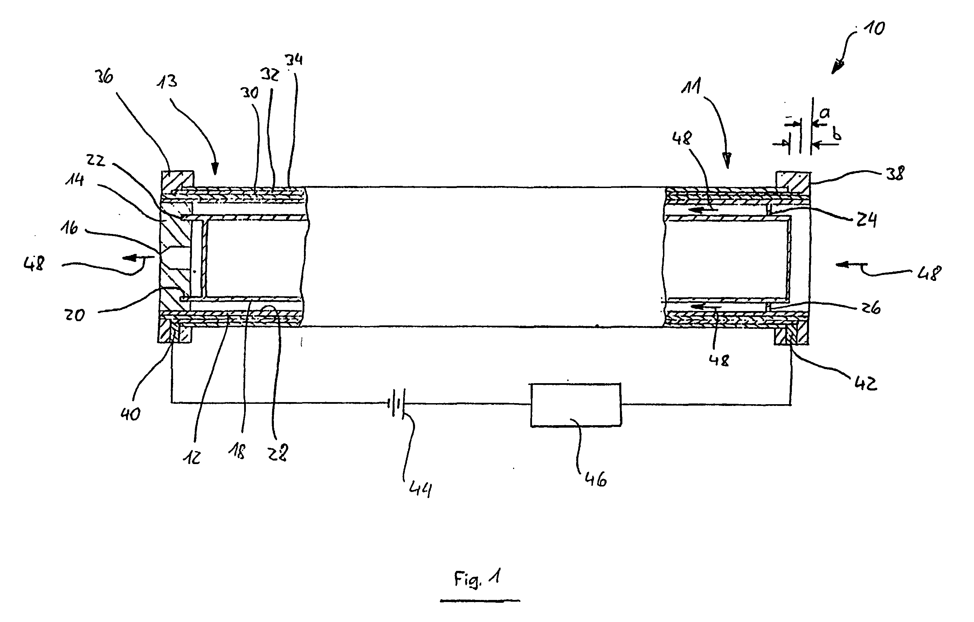

Nachfolgend wird ein Ausführungsbeispiel der Erfindung unter Bezugnahme auf die einzige Figur im Detail erläutert.

In der Figur trägt eine Vorrichtung zum Erwärmen von Brennstoff insgesamt das Bezugszeichen 10. Sie ist teilsweise gebrochen dargestellt und umfasst ein Rohr 12, welches an seinem in der Figur linken Ende einen Auslass 13 aufweist und durch ein Düsenstück 14 verschlossen ist. Das Düsenstück 14 ist im Rohr 12 verschweißt. An seinem in der Figur rechten Ende ist das Rohr 12 offen, so dass ein Einlass 11 gebildet wird. Es kann an diesem offenen Ende mit einem nicht dargestellten Gewinde versehen sein, mit dem es an eine Brennstoffzufuhr anschließbar ist. Im Düsenstück 14 befindet sich eine mittige Düsenöffnung 16 mit sich nach außen hin verjüngendem Querschnitt, durch die im Betrieb der Brennstoff aus dem Rohr 12 austritt und ein Brennstoff-Spray erzeugt wird.

Koaxial zum Rohr 12 ist in seinem Inneren ein hohler Verdrängungskörper 18 vorhanden. Er stützt sich an seinem in der Figur linken Ende mit Füßen 20 in entsprechenden Ausnehmungen 22 im Düsenstück 16 ab. An seinem in der Figur rechten Ende ist er durch einen Distanzring 24 gegenüber der Innenwand des Rohrs 12 gehaltert. In dem Distanzring 24 sind über den ganzen Umfang verteilt Durchbrüche 26, durch die im Betrieb der Brennstoff in einen zwischen dem Verdrängungskörper 18 und dem Rohr 12 gebildeten Ringraum 28 strömen kann.

Bei dem Rohr 12 handelt es sich um ein übliches Stahlrohr, wie es für Brennstoffleitungen, z.B. Zuleitungen von Heizöl zu Heizölbrennern, verwendet wird.

Auf seine radial außen liegende Mantelfläche ist eine elektrisch isolierende Schicht 30 aus Aluminumoxid durch Plasmabeschichten aufgebracht. Die Dicke der elektrisch isolierenden Schicht beträgt ca. 0,1 mm. Auf die elektrisch isolierende Schicht 30 ist wiederum eine Heizschicht 32 durch Pulver-Plasmabeschichten aufgebracht, welche sich jedoch, im Gegensatz zur isolierenden Schicht 30, nicht über die gesamte Länge des Rohres 12 erstreckt, sondern in einer Distanz a vor den jeweiligen Enden des Rohres 12 endet.

Vom einlassseitigen Ende 11 zum auslassseitigen Ende 13 hin verringert sich die Schichtstärke der Heizschicht 32 von anfangs ca. 0,1 mm bis auf ca. 0,05 mm. Bei dem Material der Heizschicht 32 handelt es sich um eine Nickel-Chrom-Eisen-Legierung, welche einen positiven Widerstands-Temperaturkoeffizienten (PTC) aufweist. Die Nickel-Chrom-Legierung ist in eine Basis aus einem pulverförmigen Keramikmaterial eingebunden. Auf die Heizschicht 32 wiederum ist eine äußere elektrisch isolierende Schicht 34 ebenfalss durch Plasmabeschichten aufgebracht, welche ebenfalls aus Aluminiumoxid besteht und von den jeweiligen Enden des Rohres 12 um eine Distanz b beabstandet ist. Diese Distanz b ist etwas größer als die Distanz a, so dass die jeweiligen Enden der Heizschicht 32 frei liegen.

Auf das Rohr 12 mit den Schichten 30, 32 und 34 ist an seinen beiden Enden, also an voneinander beabstandeten Stellen, jeweils ein Kontaktring 36 bzw. 38 aufgeschoben. Die beiden Kontaktringe 36 und 38 sind aus einem elektrisch isolierenden Material, z.B. einem Kunststoff, hergestellt. Ihre dem Rohr 12 zugewandte, also radial innenliegende, Ringfläche ist leicht gestuft ausgebildet, um der Tatsache Rechnung zu tragen, dass die äußere elektrisch isolierende Schicht 34 um eine Distanz b und die Heizschicht 32 um eine Distanz a vor dem jeweiligen
Ende des Rohres 12 endet. In die Kontaktringe 36 und 38 ist jeweils ein Kontaktstift 40 bzw. 42 eingesetzt, welcher aus einem elektrisch leitenden Material ist und einerseits die Heizschicht 32 kontaktiert und andererseits über eine elektrische Leitung 45 und eine Steuereinheit 46 mit einer Spannungsquelle 44 verbindbar ist.

Die Vorrichtung 10 funktioniert folgendermaßen:

Über eine in der Figur nicht dargestellte Pumpe und eine ebenfalls nicht dargestellte Zuführleitung wird Brennstoff, z.B. Heizöl, entsprechend den Pfeilen 48 in der Figur vom Einlass 11 zum Auslass 13 durch das Rohr 12 hindurchgeleitet. Im Rohr 12 steht dabei im Bereich der Längserstreckung der Heizschicht 32 nur der Ringraum 28 zwischen dem Verdrängungskörper 18 und der radial innen liegenden Mantelfläche des Rohres 12 zur Verfügung. Es sei an dieser Stelle darauf hingewiesen, dass weder der Verdrängungskörper 28 noch die Heizschicht 32 bzw. die Isolierschichten 30, 34 sich unbedingt über die gesamte Länge des Rohres 12 erstrecken müssen. Je größer allerdings die Kontaktfläche zwischen beheizter Wand und Brennstoff ist, umso besser gestaltet sich das Erwärmen des Brennstoffs.

Wenn durch die Steuereinheit 46 bewirkt wird, dass der aus der Spannungsquelle 44, der Leitung 45, den Kontaktstiften 40 und 42 und der Heizschicht 32 gebildete Stromkreis geschlossen wird, führt dies zu einer Erwärmung der Heizschicht 32 zwischen den Kontaktringen 36 und 38, also im wesentlichen über die gesamte Länge des Rohres 12. Diese Erwärmung ist aufgrund der größeren Schichtstärke der Heizschicht 32 im Bereich des einlassseitigen Endes 11 geringer als am auslassseitigen Ende 13, an dem die Heizschicht 32 eine geringere Schichtstärke aufweist. Die Erwärmung der Heizschicht 32 wird durch die elektrisch isolierende Schicht 30 hindurch an das Rohr 12 übertragen, so dass sich das Rohr 12 im wesentlichen über seine gesamte Länge und seine gesamte Umfangserstreckung in der gewünschten Weise erwärmt. Durch eine geeignete Materialwahl für das Düsenstück 14 wird darüber hinaus dafür gesorgt, dass durch Wärmeleitung auch das Düsenstück 14 und die Düsenöffnung 16 entsprechend erwärmt werden.

Auf dem Weg vom einlassseitigen Ende 11 zum auslassseitigen Ende 13 strömt der Brennstoff (Pfeile 48) an der erwärmten Innenwand des Rohres 12 vorbei und wird hierdurch im Verlauf des Strömungsweges ebenfalls erwärmt. Aufgrund der Veränderung der Schichtdicke der Heizschicht 32 steigt auch die Temperatur des Rohres 12 vom einlassseitigen Ende 11 zum auslassseitigen Ende 13 hin, so dass die für den Wärmeübergang zwischen Rohr 12 und Brennstoff 48 maßgebliche Temperaturdifferenz über den Strömungsweg des Brennstoffs 48 hinweg im wesentlichen konstant gehalten werden kann. Auf diese Weise kann über eine relativ kurze Strömungsdistanz eine große thermische Energie in den Brennstoff 48 eingekoppelt werden.

Durch die Isolierschichten 30 und 34 werden die die Vorrichtung 10 handhabende Personen zuverlässig vor einem Kontakt mit stromführenden Elementen geschützt. Darüber hinaus kann das Material und die Dicke der Schicht für die äußere Isolierschicht 34 so gewählt werden, dass sie auch eine thermische Isolierung bewirkt, wodurch der Energieeinsatz nochmals verringert wird. Es versteht sich ferner, dass anstelle einer Gleichstromquelle auch eine Wechselstromquelle mit höherer Spannung verwendet werden kann.

In einem nicht dargestellten Ausführungsbeispiel ist ferner auch auf der radial außen liegenden Mantelfläche des Verdrängungskörpers 18 ein aus isolierenden Schichten und einer Heizschicht bestehender Aufbau vorhanden, so dass die beiden Begrenzungswände des gebildeten Ringraumes geheizt und eine noch bessere Erwärmung des Brennstoffes erzielt werden kann.

In einem weiteren nicht dargestellten Ausführungsbeispiel wird auf den Kontaktring an einem Ende des Rohres verzichtet. Stattdessen ist die innere elektrisch isolierende Schicht; also jene, welche die Heizschicht vom Rohr elektrisch isoliert, an diesem Ende etwas zurückgenommen, so dass die Heizschicht an dieser Stelle das Rohr elektrisch kontaktiert. In diesem Fall, der aus Sicherheitsgründen natürlich nur beim Einsatz einer Niederspannungsquelle möglich ist, kann das Rohr als eine der beiden Zuführungen für die elektrische Leistung verwendet werden.

## Patentansprüche

1. Elektrische Heizvorrichtung für Fluide, mit einem rohrförmigen Trägerelement (12) und mit einem einen elektrischen Widerstand (32) umfassenden Heizelement, welches an mindestens zwei voneinander beabstandeten Stellen an eine elektrische Leistungsquelle (44) anschließbar ist, welches ein PTC-Material mit positivem Temperaturkoeffizienten umfasst und welches eine elektrisch leitende Heizschicht umfasst die durch ein thermisches Verfahren auf eine Wand der Brennstoffleitung aufgebracht ist, wobei das rohrförmige Trägerelement (12) als Leitung für das Fluid arbeitet, so dass ein Durchlauferhitzer gebildet wird, wobei das rohrförmige Element eine Brennstoffleitung (12) mit einem Einlass (11) und einem Auslass (13) umfasst, **dadurch gekennzeichnet, dass** die elektrisch leitende Heizschicht (32) des Heiizelementes durch Plasmabeschichten oder Plasmaspritzen zumindest bereichsweise auf eine Wand der Brennstoffleitung (12) aufgebracht ist.

2. Elektrische Heizvorrichtung nach Anspruch 1, **dadurch gekennzeichnet, dass** ein PTC-Material verwendet wird, dessen Temperatur-Widerstands-Kennlinie bei einer bestimmten Temperatur eine Steigungsänderung in der Art eines "Knicks" aufweist.

3. Elektrische Heizvorrichtung nach Anspruch 2, **dadurch gekennzeichnet, dass** die Steigungsänderung so ausgebildet ist, dass eine bestimmte Temperatur konstant gehalten werden kann.

4. Elektrische Heizvorrichtung nach einem der vorhergehenden Ansprüche, **dadurch gekennzeichnet, dass** sie eine elektronische Steuer- und/oder Regelungseinrichtung aufweist, mit der eine bestimmte Temperatur wenigstens eines Bereichs der Heizschicht eingestellt werden kann.

5. Elektrische Heizvorrichtung nach einem der vorhergehenden Ansprüche, **dadurch gekennzeichnet, dass** die Heizschicht ein Keramikpulver umfasst.

6. Elektrische Heizvorrichtung nach einem der vorhergehenden Ansprüche, **dadurch gekennzeichnet, dass** die Heizschicht ein Metallpulver umfasst.

7. Elektrische Heizvorrichtung nach Anspruch einem der vorhergehenden Ansprüche, **dadurch gekennzeichnet, dass** das Trägerelement (12) aus einem elektrisch leitenden Material hergestellt und zwischen Heizschicht (32) und Trägerelement (12) eine elektrisch isolierende Schicht (30) vorhanden ist.

8. Elektrische Heizvorrichtung nach Anspruch 7, **dadurch gekennzeichnet, dass** es sich bei der elektrischen Leistungsquelle um eine Niederspannungsquelle handelt und die Heizschicht an einer Stelle mit dem Trägerelement elektrisch verbunden ist.

9. Elektrische Heizvorrichtung nach Anspruch 8, **dadurch gekennzeichnet, dass** das Trägerelement aus einem elektrisch isolierenden Material, insbesondere aus einem temperaturbeständigen Kunststoff, hergestellt ist.

10. Elektrische Heizvorrichtung nach einem der vorhergehenden Ansprüche, **dadurch gekennzeichnet, dass** auf der dem Trägerelement (12) entgegengesetzten Seite der Heizschicht (32) eine elektrisch isolierende Schicht (34) vorhanden ist.

11. Elektrische Heizvorrichtung nach einem der vorhergehenden Ansprüche, **dadurch gekennzeichnet, dass** die Isolierschichten (30, 34) Aluminiumoxid Al₂O₃ umfassen.

12. Elektrische Heizvorrichtung nach einem der vorhergehenden Ansprüche, **dadurch gekennzeichnet, dass** die Isolierschichten (30, 34) durch ein thermisches Verfahren, insbesondere Plasmaschweißen, aufgebracht sind.

13. Elektrische Heizvorrichtung nach einem der vorhergehenden Ansprüche, **dadurch gekennzeichnet, dass** die Dicke der Heizschicht (32) über die Erstreckung des Trägerelements (12) variiert, so dass die Leistungsverteilung über die Erstreckung des Trägerelements variiert.

14. Elektrische Heizvorrichtung nach Anspruch 13, **dadurch gekennzeichnet, dass** im Betrieb eine über die Erstreckung konstante Temperaturdifferenz zwischen Trägerelement (12) und zu erhitzendem Material (48) erreicht wird.

15. Elektrische Heizvorrichtung nach einem der vorhergehenden Ansprüche, **dadurch gekennzeichnet, dass** die Schichtstärke mindestens einer der Schichten (30, 32, 34) im Bereich von 0,002 bis 0,2 mm, vorzugsweise im Bereich von 0,005 bis 0,1 mm, liegt.

16. Elektrische Heizvorrichtung nach einem der vorhergehenden Ansprüche, **dadurch gekennzeichnet, dass** das Heizelement zum Erwärmen von einem Brenner zuzuführendem Heizöl verwendet wird.

17. Elektrische Heizvorrichtung nach Anspruch 16, **dadurch gekennzeichnet, dass** die Brennstoffleitung (12) an einem Ende eine Einspritzdüse (16) aufweist.

18. Elektrische Heizvorrichtung nach einem der Ansprüche 16 oder 17, **dadurch gekennzeichnet, dass** die Brennstoffleitung (12) mindestens im Bereich der Heizschicht (32) einen Ringraum (28) umfasst, durch den der Brennstoff (48) geleitet wird.

19. Elektrische Heizvorrichtung nach einem der vorhergehenden Ansprüche, **dadurch gekennzeichnet, dass** sie mindestens einen auf die Brennstoffleitung (12) aufschiebbaren Kontaktring (36, 38) aufweist, der die Heizschicht (32) elektrisch kontaktiert.

## Claims

1. Electric heating device for fluids with a tube-shaped carrying element (12) and with a heating element incorporating an electric resistance (32), where this said heating element on at least two locations, these being spaced apart, is connectable to an electric power source (44) which incorporates a PTC-material with positive temperature coefficient and which incorporates an electric conducting heating layer which is deposited by means of a thermal process to a wall of the carrying element, where the tube-shaped carrying element (12) works as a line for the fluid, so that a flow-type heater is formed, where the tube-shaped element incorporates a fuel line (12) with an inlet (11) and an outlet (13), **characterised in that** the electric conducting heating layer (32) of the heating element is deposited by means of plasma coating or plasma spraying at least section-wise onto a wall of the fuel line (12).

2. Electric heating device according to Claim 1, **characterised in that** a PTC-material is used, whose temperature-resistance characteristic line at a certain temperature has a pitch variation in the nature of a "buckle".

3. Electric heating device according to Claim 2, **characterised in that** the pitch variation is formed in such a way that a certain temperature can be maintained at a constant level.

4. Electric heating device according to one of the preceding Claims, **characterised in that** the device has an electronic control and/or a regulation facility with which a certain temperature of at least one section of the heating layer can be set.

5. Electric heating device according to one of the preceding Claims, **characterised in that** the heating layer incorporates a ceramic powder.

6. Electric heating device according to one of the preceding Claims, **characterised in that** the heating layer incorporates a metal powder.

7. Electric heating device according to one of the preceding Claims, **characterised in that** the carrying element (12) is manufactured from an electrically conductive material and that there is an electric insulating layer (30) between the heating layer (32) and the carrying element (12).

8. Electric heating device according to Claim 7, **characterised in that** the electric power source is a low voltage source and the heating layer is electrically connected at one location with the carrying element.

9. Electric heating device according to Claim 8, **characterised in that** the carrying element is manufactured from an electrically insulating material, in particular from a temperature-resistant synthetic material.

10. Electric heating device according to one of the preceding Claims, **characterised in that**, on the side of the heating layer (32) opposite the carrying element (12), there is an electrically insulating layer (34).

11. Electric heating device according to one of the preceding Claims, **characterised in that** the insulating layers (30, 34) incorporate aluminium oxide Al₂O₃.

12. Electric heating device according to one of the preceding Claims, **characterised in that** the insulating layers (30, 34) are deposited by means of a thermal process, in particular plasma welding.

13. Electric heating device according to one of the preceding Claims, **characterised in that** the thickness of the heating layer (32) varies over the range of the carrying element (12) so that the capacity distribution varies over the range of the carrying element.

14. Electric heating device according to Claim 13, **characterised in that**, in operation and over the range, a constant temperature difference between the carrying element (12) and the material to be heated (48) is achieved.

15. Electric heating device according to one of the preceding Claims, **characterised in that** the layer thickness of at least one of the layers (30, 32, 34) lies in the range of 0.002 to 0.2 mm, preferentially in the range of 0.005 to 0.1 mm.

16. Electric heating device according to one of the preceding Claims, **characterised in that** the heating element is used for heating up fuel oil to be supplied to a burner.

17. Electric heating device according to Claim 16, **characterised in that** the fuel line (12) has an injection nozzle (16) at one end.

18. Electric heating device according to one of the Claims 16 or 17, **characterised in that** the fuel line (12) incorporates, at least in the area of the heating layer (32) an annular zone (28) through which the fuel (48) is conducted.

19. Electric heating device according to one of the preceding Claims, **characterised in that** the device has at least one contact ring (36, 38) mountable on the fuel line (12), where this ring electrically contacts the heating layer (32).

## Revendications

1. Dispositif de chauffage électrique pour des fluides, avec un élément de support tubulaire (12) et un élément chauffant comprenant une résistance électrique (32), qui peut être connecté, à au moins deux emplacements éloignés l'un de l'autre, à une source de puissance électrique (44), qui comprend un matériau PCT (à coefficient de température positive) et une couche chauffante électro-conductrice qui est déposée à l'aide d'un procédé thermique sur une paroi de l'élément de support, moyennant quoi l'élément de support tubulaire (12) sert à véhiculer le fluide, de telle sorte qu'on obtient un chauffe-eau instantané, moyennant quoi l'élément tubulaire comprend un conduit destiné au combustible (12) présentant une admission (11) et une évacuation (13), **caractérisé en ce que** la couche chauffante (32) électro-conductrice est déposée par projection plasma ou revêtement par projection plasma au moins en partie sur une paroi du conduit destiné au combustible (12).

2. Dispositif de chauffage électrique selon la revendication 1, **caractérisé en ce qu'**on utilise un matériau à coefficient de température positive dont la courbe caractéristique de résistance à la température, à une température déterminée, présente une modification de la pente sous la forme d'un « coude ».

3. Dispositif de chauffage électrique selon la revendication 2, **caractérisé en ce que** la modification de la pente doit être configurée de telle sorte qu'on puisse maintenir constante une température déterminée.

4. Dispositif de chauffage électrique selon l'une quelconque des revendications précédentes, **caractérisé en ce qu'**il présente un dispositif de commande et / ou de réglage électronique, grâce auquel on peut régler une température déterminée d'au moins une zone de la couche chauffante.

5. Dispositif de chauffage électrique selon l'une quelconque des revendications précédentes, **caractérisé en ce que** la couche chauffante comprend une poudre de céramique.

6. Dispositif de chauffage électrique selon l'une quelconque des revendications précédentes, **caractérisé en ce que** la couche chauffante comprend une poudre métallique.

7. Dispositif de chauffage électrique selon l'une quelconque des revendications précédentes, **caractérisé en ce que** l'élément de support (12) est réalisé dans un matériau électro-conducteur et **en ce que**, entre la couche chauffante (32) et l'élément de support (12) se trouve une couche électro-isolante (30).

8. Dispositif de chauffage électrique selon la revendication 7, **caractérisé en ce que** la source de puissance électrique est une source basse tension, et la couche chauffante est reliée par voie électrique à l'élément de support.

9. Dispositif de chauffage électrique selon la revendication 8, **caractérisé en ce que** l'élément de support est réalisé dans un matériau électro-isolant, en particulier dans une matière plastique résistant à la température.

10. Dispositif de chauffage électrique selon l'une quelconque des revendications précédentes, **caractérisé en ce que**, sur le côté opposé à l'élément de support (12) de la couche chauffante (32), se trouve une couche électro-isolante (34).

11. Dispositif de chauffage électrique selon l'une quelconque des revendications précédentes, **caractérisé en ce que** les couches isolantes (30, 34) comprennent de l'oxyde d'aluminium AL₂O₃.

12. Dispositif de chauffage électrique selon l'une quelconque des revendications précédentes, **caractérisé en ce que** les couches isolantes (30, 34) sont déposées à l'aide d'un procédé thermique, en particulier la soudure au plasma.

13. Dispositif de chauffage électrique selon l'une quelconque des revendications précédentes, **caractérisé en ce que** l'épaisseur de la couche chauffante (32) varie sur toute l'étendue de l'élément de support (12), de telle sorte que la répartition de la puissance varie sur toute l'étendue de l'élément de support.

14. Dispositif de chauffage électrique selon l'une quelconque des revendications précédentes, **caractérisé en ce que**, lors du fonctionnement, une différence de température constante sur toute l'étendue entre l'élément de support (12) et le matériau chauffant (48) devant être chauffé (48).

15. Dispositif de chauffage électrique selon l'une quelconque des revendications précédentes, **caractérisé en ce que** l'épaisseur de la couche au moins de l'une des couches (30, 32, 34) se trouve dans la plage comprise entre 0,002 à 0,2 mm, de préférence dans la plage comprise entre 0,005 à 0,1 mm.

16. Dispositif de chauffage électrique selon l'une quelconque des revendications précédentes, **caractérisé en ce que** l'élément chauffant est utilisé pour chauffer le fuel devant être acheminé depuis un brûleur.

17. Dispositif de chauffage électrique selon la revendication 16, **caractérisé en ce que** le conduit destiné au combustible (12) présente une buse d'injection (16) au niveau d'une extrémité.

18. Dispositif de chauffage électrique selon l'une quelconque des revendications 16 ou 18, **caractérisé en ce que** le conduit destiné au combustible (12) comprend, au moins dans la zone de la couche chauffante (32), un espace annulaire, qui permet d'acheminer le combustible (48).

19. Dispositif de chauffage électrique selon l'une quelconque des revendications précédentes, **caractérisé en ce qu'**il présente au moins une bague de contact (36, 68) pouvant être poussée sur le conduit destiné au combustible (12), qui établit un contact électrique avec la couche chauffante (32).
